(19) **Europäisches Patentamt**
**European Patent Office**
**Office européen des brevets**

(11) **EP 1 693 826 B1**

(12) **EUROPEAN PATENT SPECIFICATION**

(45) Date of publication and mention
of the grant of the patent:
**29.08.2007 Bulletin 2007/35**

(51) Int Cl.:
**G10L 11/00** (2006.01)

(21) Application number: **06008561.0**

(22) Date of filing: **23.07.2004**

(54) **Vocal tract resonance tracking using a nonlinear predictor**

Verfolgen von Vokaltraktresonanzen unter Verwendung eines nichtlinearen Prädiktors

Suivre des résonances du conduit vocal utilisant un prédicteur non-linéaire

(84) Designated Contracting States:
**AT BE BG CH CY CZ DE DK EE ES FI FR GB GR HU IE IT LI LU MC NL PL PT RO SE SI SK TR**

(30) Priority: **29.08.2003 US 652976**

(43) Date of publication of application:
**23.08.2006 Bulletin 2006/34**

(62) Document number(s) of the earlier application(s) in accordance with Art. 76 EPC:
**04103539.5 / 1 511 007**

(73) Proprietor: **Microsoft Corporation**
**Redmond WA 98052 (US)**

(72) Inventors:
• **Deng, Li**
**Sammamish, WA 98074 (US)**
• **Bazzi, Issam**
**New York, NY 10036 (US)**
• **Acero, Alejandro**
**Bellevue, WA 98006 (US)**

(74) Representative: **Grünecker, Kinkeldey, Stockmair & Schwanhäusser Anwaltssozietät**
**Maximilianstrasse 58**
**80538 München (DE)**

(56) References cited:
• **BAZZI I ET AL: "An expectation maximization approach for formant tracking using a parameter-free non-linear predictor" 2003 IEEE INTERNATIONAL CONFERENCE ON ACOUSTICS, SPEECH, AND SIGNAL PROCESSING IEEE PISCATAWAY, NJ, USA, vol. 1, 6 April 2003 (2003-04-06), pages 464-467, XP002305041 ISBN: 0-7803-7663-3**
• **DENG LI ET AL: "Spontaneous speech recognition using a statistical coarticulatory model for the vocal-tract-resonance dynamics" JOURNAL OF THE ACOUSTICAL SOCIETY OF AMERICA, AMERICAN INSTITUTE OF PHYSICS. NEW YORK, US, vol. 108, no. 6, December 2000 (2000-12), pages 3036-3048, XP012002060 ISSN: 0001-4966**
• **XUEDONG HUANG ET AL: "SPOKEN LANGUAGE PROCESSING: A GUIDE TO THEORY, ALGORITHM AND SYSTEM DEVELOPMENT" 2001, PRENTICE HALL , XP002318125 * page 306 - page 315 ***
• **ACERO A: "Formant analysis and synthesis using Hidden Markov Models" 6TH EUROPEAN CONFERENCE ON SPEECH COMMUNICATION AND TECHNOLOGY. EUROSPEECH '99, BUDAPEST, HUNGARY, vol. 3, 5 September 1999 (1999-09-05), pages 1047-1050, XP001075861**
• **LI DENG ET AL: "Tracking vocal tract resonances using an analytical nonlinear predictor and a target-guided temporal constraint" EUROSPEECH 2003, September 2003 (2003-09), pages 73-76, XP002305040**

**Description**

BACKGROUND OF THE INVENTION

The present invention relates to speech recognition systems and in particular to speech recognition systems that exploit vocal tract resonances in speech.

In human speech, a great deal of information is contained in the first three or four resonant frequencies of the speech signal. In particular, when a speaker is pronouncing a vowel, the frequencies (and to a less extent, bandwidths) of these resonances indicate which vowel is being spoken.

Such resonant frequencies and bandwidths are often referred to collectively as formants. During sonorant speech, which is typically voiced, formants can be found as spectral prominences in a frequency representation of the speech signal. However, during non-sonorant speech, the formants cannot be found directly as spectral prominences. Because of this, the term "formants" has sometimes been interpreted as only applying to sonorant portions of speech. To avoid confusion, some researchers use the phrase "vocal tract resonance" to refer to formants that occur during both sonorant and non-sonorant speech. In both cases, the resonance is related to only the oral tract portion of the vocal tract.

To detect formants, systems of the prior art analyzed the spectral content of a frame of the speech signal. Since a formant can be at any frequency, the prior art has attempted to limit the search space before identifying a most likely formant value. Under some systems of the prior art, the search space of possible formants is reduced by identifying peaks in the spectral content of the frame. Typically, this is done by using linear predictive coding (LPC) which attempts to find a polynomial that represents the spectral content of a frame of the speech signal. Each of the roots of this polynomial represents a possible resonant frequency in the signal and thus a possible formant. Thus, using LPC, the search space is reduced to those frequencies that form roots of the LPC polynomial.

In other formant tracking systems of the prior art, the search space is reduced by comparing the spectral content of the frame to a set of spectral templates in which formants have been identified by an expert. The closest "n" templates are then selected and used to calculate the formants for the frame. Thus, these systems reduce the search space to those formants associated with the closest templates.

One system of the prior art, developed by the same inventors as the present invention, used a consistent search space that was the same for each frame of an input signal, see Bazzi I et al.: "An Expectation Maximization Approach for Formant Tracking Using a Parameter-Free Non-Linear Predictor", 2003 IEEE International Conference on Acoustics, Speech and Signal Processing, IEEE Piscataway, NJ, USA, Vol. 1, April 6, 2003. Each set of formants in the search space was mapped into a feature vector. Each of the feature vectors was then applied to a model to determine which set of formants was most likely.

This system works well but is computationally expensive because it typically utilizes Mel-Frequency Cepstral Coefficient frequency vectors, which require the application of a set of frequencies to a complex filter that is based on all of the formants in the set of formants that is being mapped followed by a windowing step and a discrete cosine transform step in order to map the formants into the feature vectors. This computation was too time-consuming to be performed at run time and thus all of the sets of formants had to be mapped before run time and the mapped feature vectors had to be stored in a large table. This is less than ideal because it requires a substantial amount of memory to store all of the mapped feature vectors.

In addition, the mapping provided by the MFCC system is difficult to invert because the formants are combined as a product before performing the windowing function.

Thus, a formant tracking system is needed that does not reduce the search space in such a way that the formants in different frames of the speech signal are identified using different formant search spaces while at the same time limiting the amount of memory and computational resources that are needed to identify the formants.

In addition, formant trackers of the past have not utilized formant targets when determining a likelihood of a change in formants over time. Instead, past systems have used generic continuity constraints. However, such systems have not performed well in non-sonorant speech regions.

SUMMARY OF THE INVENTION

The invention is defined in the claims. A method and apparatus map a set of vocal tract resonant frequencies into a simulated feature vector by calculating a separate function for each individual vocal tract resonant frequency and summing the result to form an element of the simulated feature vector. The simulated feature vector is applied to a model along with an input feature vector to determine a probability that the set of vocal tract resonant frequencies is present in a speech signal. Under one embodiment, the model includes a target-guided transition model that provides a probability of a vocal tract resonant frequency based on a past vocal tract resonant frequency and a target for the vocal tract resonant frequency.

BRIEF DESCRIPTION OF THE DRAWINGS

FIG. 1 is a block diagram of a general computing environment in which embodiments of the present invention may be practiced.

FIG. 2 is a graph of the magnitude spectrum of a speech signal.

FIG. 3 is a flow diagram of a method under the present invention.

FIG. 4 is a block diagram of a training system for training a residual model under one embodiment of the present invention.

FIG. 5 is a block diagram of a formant tracking system under one embodiment of the present invention.

DETAILED DESCRIPTION OF ILLUSTRATIVE EMBODIMENTS

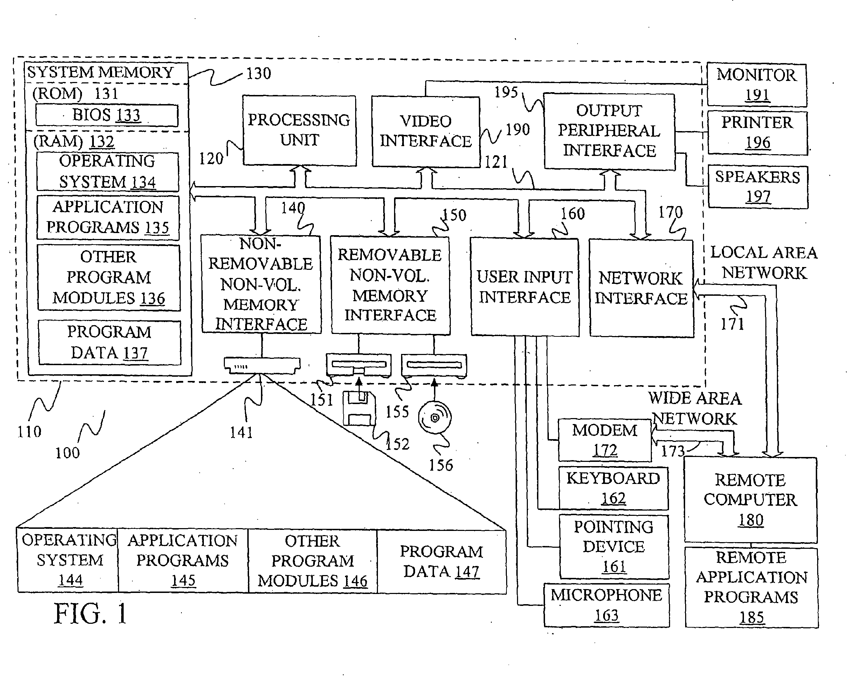

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well-known computing systems, environments, and/or configurations that may be suitable for use with the invention include, but are not limited to, personal computers, server computers, handheld or laptop devices, multiprocessor systems, microprocessor-based systems, set top boxes, programmable consumer electronics, network PCs, minicomputers, mainframe computers, telephony systems, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention is designed to be practiced in distributed computing environments where tasks are performed by remote processing devices that are linked through a communications network. In a distributed computing environment, program modules are located in both local and remote computer storage media including memory storage devices.

With reference to FIG. 1, an exemplary system for implementing the invention includes a general-purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 is operated in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

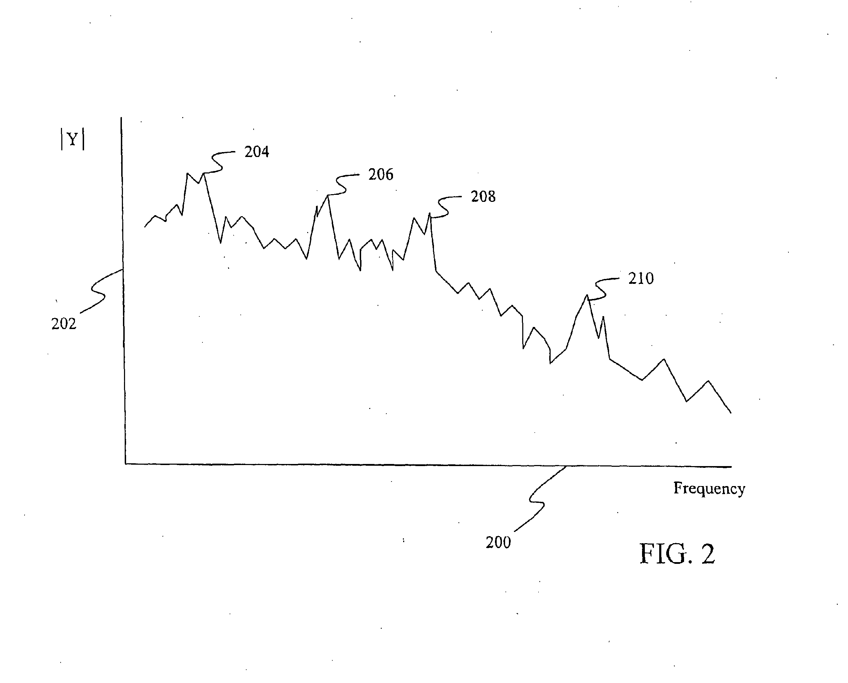

FIG. 2 is a graph of the frequency spectrum of a section of human speech. In FIG. 2, frequency is shown along horizontal axis 200 and the magnitude of the frequency components is shown along vertical axis 202. The graph of FIG. 2 shows that sonorant human speech contains resonances or formants, such as first formant 204, second formant 206, third formant 208, and fourth formant 210. Each formant is described by its center frequency, F, and its bandwidth, B.

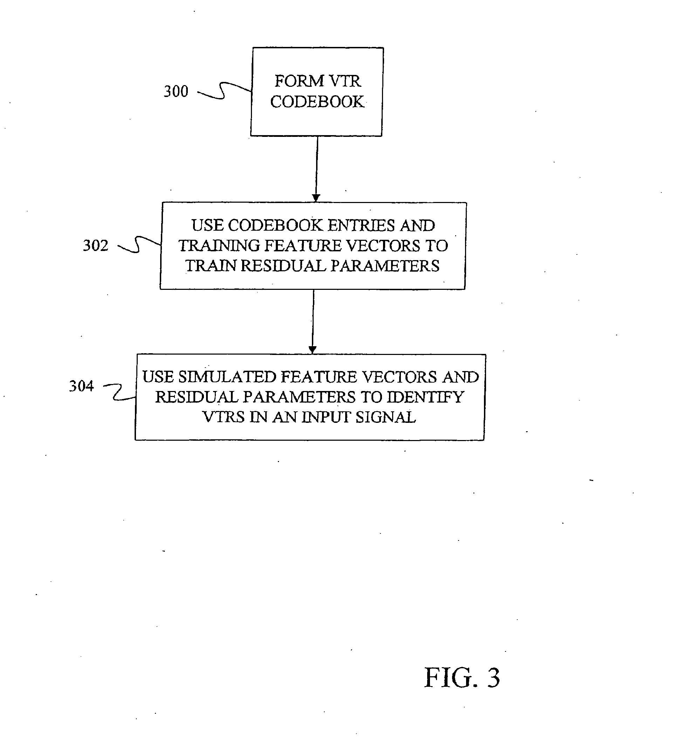

The present invention provides methods for identifying the formant frequencies and bandwidths in a speech signal, both in sonorant and non-sonorant speech. Thus, the invention is able to track vocal tract resonances. FIG. 3 provides a general flow diagram for these methods.

In step 300 of FIG. 3, a vocal tract resonance (VTR) codebook, stored in a table, is constructed by quantizing the possible VTR frequencies and bandwidths to form a set of quantized values and then forming entries for different combinations of the quantized values. Thus, the resulting codebook contains entries that are vectors of VTR frequencies and bandwidths. For example, if the codebook contains entries for four VTRs, the ith entry x[i] in the codebook would be a vector of $[F_{1i}, B_{1i}, F_{2i}, B_{2i}, F_{3i}, B_{3i}, F_{4i}, B_{4i}]$ where $F_{1i}, F_{2i}, F_{3i}$, and $F_{4i}$ are the frequencies of the first, second, third and fourth VTRs and $B_{1i}, B_{2i}, B_{3i}$, and $B_{4i}$ are the bandwidths for the first, second, third and fourth VTRs. In the discussion below, the index to the codebook, i, is used interchangeably with the value stored at that index, x[i]. When the index is used alone below, it is intended to represent the value stored at that index.

Under one embodiment, the formants and bandwidths are quantized according to the entries in Table 1 below, where Min(Hz) is the minimum value for the frequency or bandwidth in Hertz, Max(Hz) is the maximum value in Hertz, and "Num. Quant." is the number of quantization states. For the frequencies and the bandwidths, the range between the minimum and maximum is divided by the number of quantization states to provide the separation between each of the quantization states. For example, for bandwidth $B_1$ in Table 1, the range of 260 Hz is evenly divided by the 5 quantization states such that each state is separated from the other states by 65 Hz. (i.e., 40, 105, 170, 235, 300).

Table 1.

|  | Min(Hz) | Max(Hz) | Num. Quant. |
|---|---|---|---|
| $F_1$ | 200 | 900 | 20 |
| $F_2$ | 600 | 2800 | 20 |
| $F_3$ | 1400 | 3800 | 20 |
| $F_4$ | 1700 | 5000 | 40 |
| $B_1$ | 40 | 300 | 5 |
| $B_2$ | 60 | 300 | 5 |
| $B_3$ | 60 | 500 | 5 |
| $B_4$ | 100 | 700 | 10 |

The number of quantization states in Table 1 could yield a total of more than 100 million different sets of VTRs. However, because of the constraint $F_1 < F_2 < F_3 < F_4$ there are substantially fewer sets of VTRs in the VTR search space defined by the codebook.

After the codebook has been formed, the entries in the codebook are used to train parameters that describe a residual random variable at step 302. The residual random variable is the difference between a set of observation training feature vectors and a set of simulated feature vectors. In terms of an equation:

$$v_t = o_t - C(x_t[i]) \qquad \text{EQ. 1}$$

where $v_t$ is the residual, $o_t$ is the observed training feature vector at time t and $C(x_t[i])$ is a simulated feature vector.

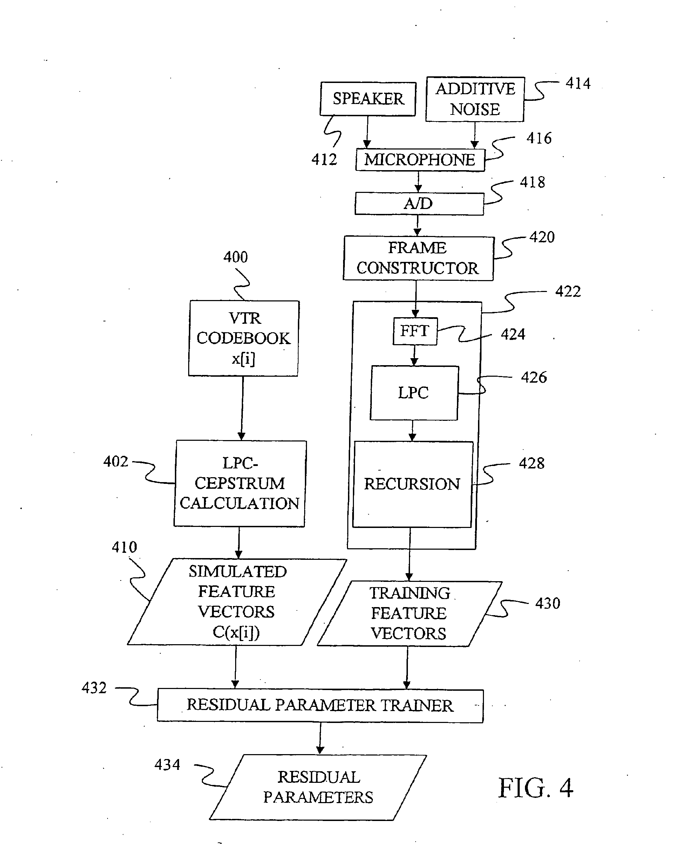

As shown in FIG. 4, the simulated feature vectors $C(x_t[i])$ 410 are constructed when needed by applying a set of VTRs $x_t[i]$ in VTR codebook 400 to an LPC-Cepstrum calculator 402, which performs the following calculation:

$$C_n(x_t[i]) = \sum_{k=1}^{K} \frac{2}{n} e^{-\pi n \frac{b_k[i]}{f_s}} \cos(2\pi n \frac{f_k[i]}{f_s}) \qquad \text{EQ. 2}$$

where $C_n(x_t[i])$ is the nth element in an *n*th order LPC-Cepstrum feature vector, K is the number of VTRs, $f_k$ is the kth VTR frequency, $b_k$ is the kth VTR bandwidth, and $f_s$ is the sampling frequency, which in many embodiments is 8 kHz. The $C_0$ element is set equal to log$G$, where G is a gain.

To produce the observed training feature vectors $o_t$ used to train the residual model, a human speaker 412 generates an acoustic signal that is detected by a microphone 416, which also detects additive noise 414. Microphone 416 converts the acoustic signals into an analog electrical signal that is provided to an analog-to-digital (A/D) converter 418. The analog signal is sampled by A/D converter 418 at the sampling frequency $f_s$ and the resulting samples are converted into digital values. In one embodiment, A/D converter 418 samples the analog signal at 8 kHz with 16 bits per sample, thereby creating 16 kilobytes of speech data per second. The digital samples are provided to a frame constructor 420, which groups the samples into frames. Under one embodiment, frame constructor 420 creates a new frame every 10 milliseconds that includes 25 milliseconds worth of data.

The frames of data are provided to an LPC-Cepstrum feature extractor 422, which converts the signal to the frequency domain using a Fast Fourier Transform (FFT) 424 and then identifies a polynomial that represents the spectral content of a frame of the speech signal using an LPC coefficient system 426. The LPC coefficients are converted into LPC cepstrum coefficients using a recursion 428. The output of the recursion is a set of training feature vectors 430 representing the training speech signal.

The simulated feature vectors 410 and the training feature vectors 430 are provided to residual trainer 432 which trains the parameters for the residual $v_t$.

Under one embodiment, $v_t$ is a single Gaussian with mean $h$ and a precision $D$, where $h$ is a vector with a separate mean for each component of the feature vector and D is a diagonal precision matrix with a separate value for each component of the feature vector.

These parameters are trained using an Expectation-Maximization (EM) algorithm under one embodiment of the present invention. During the E-step of this algorithm, a posterior probability $\gamma_t(i) = p(x_t[i] \mid o_1^N)$ is determined. Under one embodiment, this posterior is determined using a backward-forward recursion defined as:

$$\gamma_t(i) = \frac{\alpha_t(i)\beta_t(i)}{\sum_i \alpha_t(i)\beta_t(i)} \qquad\qquad EQ. \; 3$$

where $\alpha_t(i)$ and $\beta_t(i)$ are recursively determined as:

$$\alpha_t(i) = \sum_j \alpha_{t-1}(j)p(x_t[i] \mid x_{t-1}[j])p(o_t \mid x_t[i] = x[i]) \qquad EQ. \; 4$$

$$\beta_t(i) = \sum_j \beta_{t+1}(j)p(x_t[i] \mid x_{t+1}[j])p(o_t \mid x_t[i] = x[i]) \qquad EQ. \; 5$$

Under one aspect of the invention, the transition probabilities $p(x_t[i]|x_{t-1}[j])$ and $p(x_t[i]|x_{t+1}[j])$ are determined using a target-based state equation in the dynamic model parameterized as:

$$x_t(i) = rx_{t-1}(j) + (1-r)T_s + w_t \qquad\qquad EQ. \; 6$$

where $x_t[i]$ is the value of the VTRs at frame t, $x_{t-1}[i]$ is the value of the VTRs at previous frame t-1, $r$ is a rate, $T_s$ is a target for the VTRs that in one embodiment is tied to the speech unit associated with frame t and $w_t$ is the noise at frame t, which in one embodiment is assumed to be a zero-mean Gaussian with a precision matrix $B$.

Using this dynamic model, the transition probabilities can be described as Gaussian functions:

$$p(x_t[i] \mid x_{t-1}[j]) = N(x_t[i]; rx_{t-1}(j) + (1-r)T_s, B) \qquad EQ. \; 7$$

$$p(x_t[i] \mid x_{t+1}[j]) = N(x_{t+1}[i]; rx_t(j) + (1-r)T_s, B) \qquad EQ. \; 8$$

Where $T_s$ is selected based on an assignment of frames to speech units that is performed using Hidden Markov Model (HMM) segmentation system. Such HMM systems are well known in the art.

Alternatively, the posterior probability $\gamma_t(i) = p(x_t[i] \mid o_1^N)$ may be estimated by making the probability only dependent on the current observation vector and not the sequence of vectors such that the posterior probability becomes:

$$\gamma_t(i) \approx p(x_t[i] \mid o_t) \qquad\qquad EQ. \; 9$$

which can be calculated as:

$$p(x_t[i] \mid o_t) = \frac{N(o_t; C(x_t[i]) + \hat{h}, \hat{D})}{\sum_{i-1}^{I} N(o_t; C(x_t[i]) + \hat{h}, \hat{D})} \qquad \text{EQ. 10}$$

where $\hat{h}$ is the mean of the residual and $\hat{D}$ is the precision of the residual as determined from a previous iteration of the EM algorithm or as initially set if this is the first iteration.

After the E-step is performed to identify the posterior probability $\gamma_t(i) = p(x_t[i] \mid o_1^N)$, an M-step is performed to determine the mean $h$ and each diagonal element $d^{-1}$ of the variance $D^{-1}$ (the inverse of the precision matrix) of the residual using:

$$\hat{h} = \frac{\sum_{t=1}^{N} \sum_{i-1}^{I} \gamma_t(i) \{o_t - C(x_t[i])\}}{N} \qquad \text{EQ. 11}$$

$$\hat{d}^{-1} = \frac{\sum_{t=1}^{N} \sum_{i-1}^{I} \gamma_t(i) \{o_t - C(x_t[i]) - \hat{h}\}^2}{N} \qquad \text{EQ. 12}$$

where $N$ is the number of frames in the training utterance, $I$ is the number of quantization combinations for the VTRs, $o_t$ is the observed feature vector at time t and $C(x_t[i])$ is a simulated feature vector for VTRs $x_t[i]$.

Residual trainer 432 updates the mean and covariance multiple times by iterating the E-step and the M-step, each time using the mean and variance from the previous iteration. After the mean and variance reach stable values, they are stored as residual parameters 434.

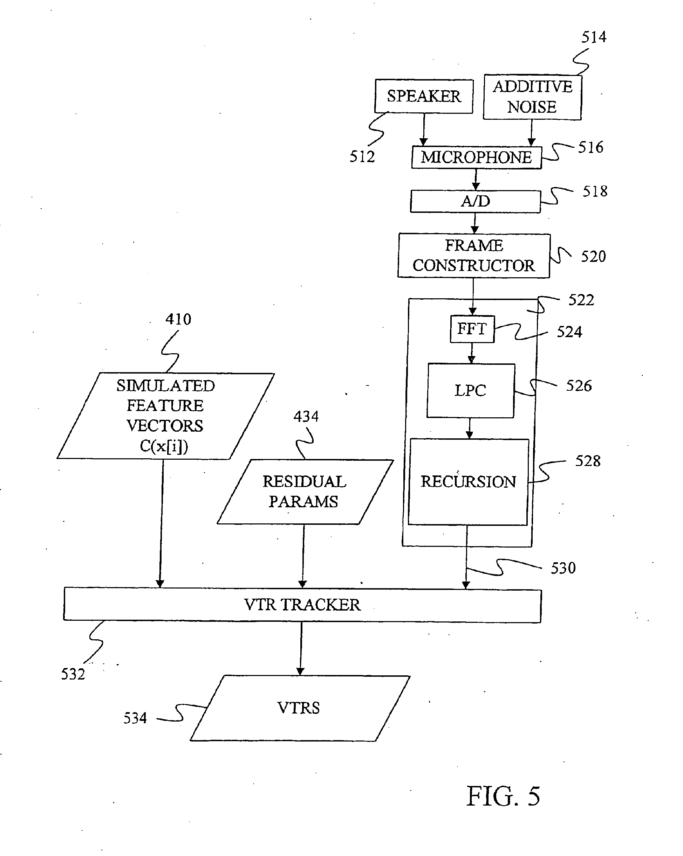

Once residual parameters 434 have been constructed they can be used in step 304 of FIG. 3 to identify VTRs in an input speech signal. A block diagram of a system for identifying formants is shown in FIG. 5.

In FIG. 5, a speech signal is generated by a speaker 512. The speech signal and additive noise 514 are converted into a stream of feature vectors 530 by a microphone 516, A/D converter 518, frame constructor 520, and feature extractor 522, which consists of an FFT 524, LPC system 526, and a recursion 528. Note that microphone 516, A/D converter 518, frame constructor 520 and feature extractor 522 operate in a similar manner to microphone 416, A/D converter 418, frame constructor 420 and feature extractor 422 of FIG. 4.

The stream of feature vectors 530 is provided to a formant tracker 532 together with residual parameters 434 and simulated feature vectors 410. Formant tracker 532 uses dynamic programming to identify a sequence of most likely formants 534. In particular, it utilizes a Viterbi decoding algorithm where each node in the trellis diagram has an optimal partial score of:

$$\delta_t(i) = \max_{x[i]_1^{t-1}} \prod_{\tau=1}^{t-1} p(o_\tau \mid x_\tau[i]) p(o_t \mid x_t[i] = x[i])$$

$$\times p(x[i]_1) \prod_{\tau=2}^{t-1} p(x_\tau[i] \mid x_{\tau-1}[i]) p(x_\tau[i] = x[i] \mid x_{\tau-1}[i])$$

$$\text{EQ. 13}$$

Based on the optimality principle, the optimal partial likelihood at the processing stage of t+1 can be computed using the following Viterbi recursion:

$$\delta_{t+1}(i) = \max_{i'} \delta_t(i') p(x_{t+1}[i] = x[i] \mid x_t[i] = x[i']) p(o_{t+1} \mid x_{t+1}[i] = x[i])$$

$$EQ. \ 14$$

In equation 14, the "transition" probability $p(x_{t+1}[i]=x[i]|x_t[i]=x[i'])$ is calculated using state equation 6 above to produce a Gaussian distribution of:

$$p(x_{t+1}[i] = x[i] \mid x_t[i] = x[i']) = N(x_{t+1}[i]; rx_t(i') + (1-r)T_s, B)$$

$$EQ. \ 15$$

where $rx_t(i')+(1-r)T_s$ is the mean of the distribution and $B$ is the precision of the distribution. The value of $T_s$ is selected based on an initial HMM segmentation that is performed to align the frames with speech units. Such HMM segmentation systems are well known in the art.

The observation probability $p(o_{t+1}|x_{t+1}[i]=x[i])$ of equation 14 is treated as a Gaussian and is computed from observation equation 1 and the residual parameters $h$ and $D$ such that:

$$p(o_{t+1} \mid x_{t+1}[i] = x[i]) = N(o_{t+1}; C(x_{t+1}[i] + h, D)$$

$$EQ. \ 16$$

Back tracing of the optimal quantization index $i'$ in equation 14 provides the estimated VTR sequence.

To reduce the number of computations that must be performed, a pruning beam search may be performed instead of a rigorous Viterbi search. In one embodiment, an extreme form of pruning is used where only one index is identified for each frame.

By using a target-based continuity constraint when determining the transition probabilities for the formants, the present invention allows for accurate tracking of formants even in non-sonorant speech regions. In addition, by using LPC-cepstrum feature vectors, the present invention avoids the need to store large simulated feature vectors. Instead, the simulated feature vectors can be easily calculated using equation 2 above during run time.

Although the present invention has been described with reference to particular embodiments, workers skilled in the art will recognize that changes may be made in form and detail without departing from the scope of the invention.

## Claims

1. A computer-readable medium (130, 141, 152, 156, 180) having computer-executable instructions for performing steps comprising:

   receiving an input feature vector (530) representing a frame of a speech signal;
   mapping (402) a set of vocal tract resonant frequencies (400) into a simulated feature vector (410) by calculating a separate function for each individual vocal tract resonant frequency and summing the results of each function to form an element of the simulated feature vector; and
   applying (532) the input feature vector and the simulated feature vector to a model to determine a probability that the set of vocal tract resonant frequencies is present in the frame of the speech signal.

2. The computer-readable medium of claim 1, wherein mapping a set of vocal tract resonant frequencies comprises mapping the set of vocal tract resonant frequencies into Linear Predictive Coding cepstrum.

3. The computer-readable medium of claim 1 or 2, wherein determining a probability that the set of vocal tract resonant frequencies is present in the frame further comprises determining a probability of transitioning from a set of vocal tract resonant frequencies in a previous frame to the set of vocal tract resonant frequencies.

4. The computer-readable medium of claim 3, wherein determining a probability of transitioning from a set of vocal tract resonant frequencies in a previous frame comprises utilizing a target-guided constraint.

**5.** The computer-readable medium of one of claims 1 to 4, wherein mapping a set of vocal tract resonant frequencies further comprises mapping bandwidths (400) associated with the vocal tract resonant frequencies.

**6.** The computer-readable medium of claim 5, wherein mapping comprises calculating a separate function for each individual vocal tract resonant frequency and associated bandwidth and summing the results of each function to form an element of the simulated feature vector.

**7.** A method comprising:

receiving an input feature vector (530) representing a frame of a speech signal;
mapping (402) a set of vocal tract resonant frequencies (400) into a simulated feature vector (410) by calculating a separate function for each individual vocal tract resonant frequency and summing the results of each function to form an element of the simulated feature vector; and
applying (532) the input feature vector and the simulated feature vector to a model to determine a probability that the set of vocal tract resonant frequencies is present in the frame of the speech signal.

**8.** A system (100, 110, 180) comprising:

means (532) for receiving an input feature vector (530) representing a frame of a speech signal;
means (402) for mapping a set of vocal tract resonant frequencies (400) into a simulated feature vector (410) by calculating a separate function for each individual vocal tract resonant frequency and summing the results of each function to form an element of the simulated feature vector; and
means (532) for applying the input feature vector and the simulated feature vector to a model to determine a probability that the set of vocal tract resonant frequencies is present in the frame of the speech signal.

**Patentansprüche**

**1.** Computerlesbares Medium (130, 141, 152, 156, 180), das durch Computer ausführbare Befehle zum Durchführen von Schritten aufweist, die umfassen:

Empfangen eines Eingabemerkmalsvektors (530), der einen Rahmen eines Sprachsignals repräsentiert;
Zuordnen (402) eines Satzes von Vokaltraktresonanzfrequenzen (400) zu einem simulierten Merkmalsvektor (410) durch Berechnen einer separaten Funktion für jede einzelne Vokaltraktresonanzfrequenz und Summieren der Ergebnisse jeder Funktion, um ein Element des simulierten Merkmalsvektors auszubilden; und
Anwenden (532) des Eingabemerkmalsvektors und des simulierten Merkmalsvektors auf ein Modell, um eine Wahrscheinlichkeit zu bestimmen, dass der Satz von Vokaltraktresonanzfrequenzen in dem Rahmen des Sprachsignals vorhanden ist.

**2.** Computerlesbares Medium nach Anspruch 1, wobei Zuordnen des Satzes von Vokaltraktresonanzfrequenzen zu einem Cepstrum linear prädiktiver Codierung umfasst.

**3.** Computerlesbares Medium nach Anspruch 1 oder 2, wobei Bestimmen einer Wahrscheinlichkeit, dass der Satz von Vokaltraktresonanzfrequenzen in dem Rahmen vorhanden ist, des Weiteren Bestimmen einer Wahrscheinlichkeit des Übergangs von einem Satz von Vokaltraktresonanzfrequenzen in einem vorangehenden Rahmen zu dem Satz von Vokaltraktresonanzfrequenzen umfasst.

**4.** Computerlesbares Medium nach Anspruch 3, wobei Bestimmen einer Wahrscheinlichkeit des Übergangs von einem Satz von Vokaltraktresonanzfrequenzen in einem vorangehenden Rahmen Verwenden einer zielgeführten Randbedingung umfasst.

**5.** Computerlesbares Medium nach einem der Ansprüche 1 bis 4, wobei Zuordnen eines Satzes von Vokaltraktresonanzfrequenzen des Weiteren Zuordnen von Bandbreiten (400) umfasst, die mit den Vokaltraktresonanzfrequenzen verbunden sind.

**6.** Computerlesbares Medium nach Anspruch 5, wobei Zuordnen Berechnen einer separaten Funktion für jede einzelne Vokaltraktresonanzfrequenz und zugehörige Bandbreite sowie Summieren der Ergebnisse jeder Funktion zum Ausbilden eines Elementes des simulierten Merkmalsvektors umfasst.

**7.** Verfahren, das umfasst:

Empfangen eines Eingabemerkmalsvektors (530), der einen Rahmen eines Sprachsignals repräsentiert;
Zuordnen (402) eines Satzes von Vokaltraktresonanzfrequenzen (400) zu einem simulierten Merkmalsvektor (410) durch Berechnen einer separaten Funktion für jede einzelne Vokaltraktresonanzfrequenz und Summieren der Ergebnisse jeder Funktion, um ein Element des simulierten Merkmalsvektors auszubilden; und
Anwenden (532) des Eingabemerkmalsvektors und des simulierten Merkmalsvektors auf ein Modell, um eine Wahrscheinlichkeit zu bestimmen, dass der Satz von Vokaltraktresonanzfrequenzen in dem Rahmen des Sprachsignals vorhanden ist.

**8.** System (100, 110, 180), das umfasst:

eine Einrichtung (532) zum Empfangen eines Eingabemerkmalsvektors (530), der einen Rahmen eines Sprachsignals repräsentiert;
eine Einrichtung (402) zum Zuordnen eines Satzes von Vokaltraktresonanzfrequenzen (400) zu einem simulierten Merkmalsvektor (410) durch Berechnen einer separaten Funktion für jede einzelne Vokaltraktresonanzfrequenz und Summieren der Ergebnisse jeder Funktion, um ein Element des simulierten Merkmalsvektors auszubilden; und
eine Einrichtung (532) zum Anwenden des Eingabemerkmalsvektors und des simulierten Merkmalsvektors auf ein Modell, um eine Wahrscheinlichkeit zu bestimmen, dass der Satz von Vokaltraktresonanzfrequenzen in dem Rahmen des Sprachsignals vorhanden ist.

## Revendications

**1.** Support lisible par ordinateur (130, 141, 152, 156, 180) comportant des instructions exécutables par ordinateur pour effectuer des étapes comprenant:

la réception d'un vecteur de particularité d'entrée (530) représentant une trame d'un signal de parole ;
la mise en correspondance (402) d'un ensemble de fréquences de résonance de voies vocales (400) et d'un vecteur de particularité simulé (410) en calculant une fonction séparée pour chaque fréquence de résonance individuelle de voies vocales et en sommant les résultats de chaque fonction afin de former un élément du vecteur de particularité simulé ; et
l'application (532) du vecteur de particularité d'entrée et du vecteur de particularité simulé à un modèle afin de déterminer une probabilité que l'ensemble de fréquences de résonance de voies vocales soit présent dans la trame du signal de parole.

**2.** Support lisible par ordinateur selon la revendication 1, dans lequel la mise en correspondance d'un ensemble de fréquences de résonance de voies vocales comprend la mise en correspondance de l'ensemble de fréquences de résonance de voies vocales et d'un cepstre à codage de prédiction linéaire (LPC).

**3.** Support lisible par ordinateur selon la revendication 1 ou 2, dans lequel la détermination d'une probabilité que l'ensemble de fréquences de résonance de voies vocales soit présent dans la trame comprend en outre la détermination d'une probabilité de transition d'un ensemble de fréquences de résonance de voies vocales d'une trame précédente à l'ensemble de fréquences de résonance de voies vocales.

**4.** Support lisible par ordinateur selon la revendication 3, dans lequel la détermination d'une probabilité de transition d'un ensemble de fréquences de résonance de voies vocales d'une trame précédente comprend l'utilisation d'une contrainte guidée par cible.

**5.** Support lisible par ordinateur selon l'une quelconque des revendications 1 à 4, dans lequel la mise en correspondance d'un ensemble de fréquences de résonance de voies vocales comprend en outre la mise en correspondance de largeurs de bande (400) associées aux fréquences de résonance de voies vocales.

**6.** Support lisible par ordinateur selon la revendication 5, dans lequel la mise en correspondance comprend le calcul d'une fonction séparée pour chaque fréquence de résonance individuelle de voies vocales et la largeur de bande associée, et la sommation de résultats de chaque fonction afin de former un élément du vecteur de particularité simulé.

7. Procédé comprenant :

la réception d'un vecteur de particularité d'entrée (530) représentant une trame d'un signal de parole ;

la mise en correspondance (402) d'un ensemble de fréquences de résonance de voies vocales (400) et d'un vecteur de particularité simulé (410) en calculant une fonction séparée pour chaque fréquence de résonance individuelle de voies vocales, et en sommant les résultats de chaque fonction afin de former un élément du vecteur de particularité simulé ; et

l'application (532) du vecteur de particularité d'entrée et du vecteur de particularité simulé à un modèle afin de déterminer une probabilité que l'ensemble de fréquences de résonance de voies vocales soit présent dans la trame du signal de parole.

8. Système (100, 110, 180) comprenant :

des moyens (532) pour recevoir un vecteur de particularité d'entrée (530) représentant une trame d'un signal de parole ;

des moyens (402) pour mettre en correspondance un ensemble de fréquences de résonance de voies vocales (400) et un vecteur de particularité simulé (410) en calculant une fonction séparée pour chaque fréquence de résonance individuelle de voies vocales, et en sommant les résultats de chaque fonction afin de former un élément du vecteur de particularité simulé ; et

des moyens (532) pour appliquer le vecteur de particularité d'entrée et le vecteur de particularité simulé à un modèle afin de déterminer une probabilité que l'ensemble de fréquences de résonance de voies vocales soit présent dans la trame du signal de parole.

FIG. 1

SYSTEM MEMORY 130

(ROM) 131
BIOS 133

(RAM) 132
OPERATING SYSTEM 134
APPLICATION PROGRAMS 135
OTHER PROGRAM MODULES 136
PROGRAM DATA 137

PROCESSING UNIT 120

VIDEO INTERFACE 190

OUTPUT PERIPHERAL INTERFACE 195

MONITOR 191

PRINTER 196

SPEAKERS 197

121

NON-REMOVABLE NON-VOL. MEMORY INTERFACE 140

REMOVABLE NON-VOL. MEMORY INTERFACE 150

USER INPUT INTERFACE 160

NETWORK INTERFACE 170

LOCAL AREA NETWORK

171

WIDE AREA NETWORK

110
100

141

151
155
152
156

MODEM 172
173

KEYBOARD 162

POINTING DEVICE 161

MICROPHONE 163

REMOTE COMPUTER 180

REMOTE APPLICATION PROGRAMS 185

OPERATING SYSTEM 144 | APPLICATION PROGRAMS 145 | OTHER PROGRAM MODULES 146 | PROGRAM DATA 147

EP 1 693 826 B1

12

FIG. 2

300 ⟋ | FORM VTR CODEBOOK |

302 ⟋ | USE CODEBOOK ENTRIES AND TRAINING FEATURE VECTORS TO TRAIN RESIDUAL PARAMETERS |

304 ⟋ | USE SIMULATED FEATURE VECTORS AND RESIDUAL PARAMETERS TO IDENTIFY VTRS IN AN INPUT SIGNAL |

FIG. 3

SPEAKER | ADDITIVE NOISE ⟿ 414

412 ⟿ | MICROPHONE ⟿ 416

A/D ⟿ 418

FRAME CONSTRUCTOR ⟿ 420

400 ⟿

VTR CODEBOOK x[i]

⟿ 422

FFT ⟿ 424

402 ⟿ LPC-CEPSTRUM CALCULATION

LPC ⟿ 426

410 ⟿

SIMULATED FEATURE VECTORS C(x[i])

RECURSION ⟿ 428

TRAINING FEATURE VECTORS ⟿ 430

432 ⟿ RESIDUAL PARAMETER TRAINER

434 ⟿ RESIDUAL PARAMETERS

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BAZZI I et al.** An Expectation Maximization Approach for Formant Tracking Using a Parameter-Free Non-Linear Predictor. *IEEE International Conference on Acoustics, Speech and Signal Processing,* 06 April 2003, vol. 1